# EUROPEAN PATENT APPLICATION

(11) **EP 4 496 277 A1**
(43) Date of publication of application: **22.01.2025**
(21) Application number: 22931339.0
(22) Date of filing: 15.03.2022
(51) Int. Cl.: H04L 27/26, H04W 52/02

(54) **WIRELESS COMMUNICATION METHOD, AND DEVICES**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN); XU, Weijie, Dongguan, Guangdong 523860 (CN); HU, Rongyi, Dongguan, Guangdong 523860 (CN); ZHANG, Zhi, Dongguan, Guangdong 523860 (CN); HUANG, Lei, Singapore 049483 (SG)
(74) Representative: Novagraaf Technologies
(86) International application number: PCT/CN2022/081025
(87) International publication number: WO 2023/173300

(57) **Abstract**

A wireless communication method, and devices. The method comprises: an access point device sending a first signal, which comprises a first-part signal and a second-part signal, wherein the first-part signal is transmitted by means of a legacy 802.11 wireless interface, and the second-part signal is transmitted by means of a zero-power-consumption wireless interface, the first-part signal comprising a first preamble signal.

## Description

### TECHNICAL FIELD

The present disclosure relates to the field of communications, and in particular, relates to methods for wireless communication, and devices thereof.

### BACKGROUND

In an unlicensed spectrum, communication devices need to follow a "listen-before-talk (LBT)" mechanism. That is, the communication device needs to perform channel listening prior to transmitting a signal on a channel in the unlicensed spectrum, and the communication device transmits the signal only in a case that a result of the channel listening is channel-free. In a case that the result of channel listening by the communication device on the channels in the unlicensed spectrum is channel busy, the communication device fails to transmit the signal.

In a wireless fidelity (Wi-Fi) system, a Wi-Fi device employs a carrier listening mechanism to determine whether a channel is idle. For example, the Wi-Fi device determines whether a channel is idle by listening a unique sequence signal (e.g., a preamble signal) on the channel.

Zero-power terminals have a wide range of applications in cellular communication systems, such as passive IoT systems, due to their advantages of low cost, low complexity, and low power consumption. Unlicensed spectrum is an important deployment scenario in the cellular communication systems, and in a case that a zero-power device is applied in a Wi-Fi system, how to achieve compatibility with a Wi-Fi device is an urgent problem.

### SUMMARY

Embodiments of the present disclosure provide methods for wireless communication and devices thereof, which facilitate realization of compatibility between a zero-power device and a conventional Wi-Fi device in a Wi-Fi system.

In a first aspect of the embodiments of the present disclosure, a method for wireless communication is provided. The method includes: transmitting, by an access point device, a first signal, wherein the first signal includes a first signal portion and a second signal portion, wherein the first signal portion is transmitted over a conventional 802.11 radio interface, the second signal portion is transmitted over a zero-power radio interface, the first signal portion including a first preamble signal.

In a second aspect of the embodiments of the present disclosure, a method for wireless communication is further provided. The method includes: receiving, a zero-power device, a second signal portion of a first signal by a zero-power radio interface, wherein the first signal includes a first signal portion and the second signal portion, the first signal portion being transmitted over a conventional 802.11 radio interface, the first signal portion including a first preamble signal.

In a third aspect of the embodiments of the present disclosure, a method for wireless communication is further provided. The method includes: transmitting, by a first device, a second signal, wherein the second signal includes a third preamble signal and a carrier signal, and the second signal is configured for a zero-power device generating a backscatter signal.

In a fourth aspect of the embodiments of the present disclosure, a method for wireless communication is further provided. The method includes: receiving, by a zero-power device, a second signal, wherein the second signal includes a third preamble signal and a carrier signal; and generating, by the zero-power device, a backscatter signal based on the second signal.

In a fifth aspect of the embodiments of the present disclosure, an access point device is provided. The access point device is configured to perform the method as described in the first aspect or its various implementations.

In some embodiments, the access point device includes functional modules configured to perform the method as described in the first aspect or its various implementations.

In a sixth aspect of the embodiments of the present disclosure, a zero-power device is provided. The zero-power device is configured to perform the method as described in the second aspect or its various implementations.

In some embodiments, the zero-power device includes functional modules configured to perform the method as described in the second aspect or its various implementations.

In a seventh aspect of the embodiments of the present disclosure, a communication device is provided. The communication device is configured to perform the method as described in the third aspect or its various implementations.

In some embodiments, the communication device includes functional modules configured to perform the method as described in the third aspect or its various implementations.

In an eighth aspect of the embodiments of the present disclosure, a zero-power device is provided. The zero-power device is configured to perform the method as described in the fourth aspect or its various implementations.

In some embodiments, the zero-power device includes functional modules configured to perform the method as described in the fourth aspect or its various implementations.

In a ninth aspect of the embodiments of the present disclosure, a communication device is provided. The device includes a processor and a memory configured to store at least one computer program, wherein the processor, when calling and running the at least one computer program stored in the memory, is caused to perform the method as described in any one of the first to fourth aspects or its various implementations.

In a tenth aspect of the embodiments of the present disclosure, a chip is provided. The chip includes a processor, wherein the processor, when calling and running at least one computer program from a memory, causes a device equipped the chip to perform the method as described in any one of the first to fourth aspects or its various implementations.

In an eleventh aspect of the embodiments of the present disclosure, a computer-readable storage medium is provided. The computer-readable storage medium is configured to store at least one computer program, wherein the at least one computer program, when loaded and run by a computer, causes the computer to perform the method as described in any one of the first to fourth aspects or its various implementations.

In a twelfth aspect of the embodiments of the present disclosure, a computer program product is provided. The computer program product includes at least one computer program instruction, wherein the at least one computer program instruction, when loaded and run by a computer, causes the computer to perform the method as described in any one of the first to fourth aspects or its various implementations.

In a thirteenth aspect of the embodiments of the present disclosure, a computer program further is provided. The computer program, when loaded and run by a computer, causes the computer to perform the method as described in any one of the first to fourth aspects or its various implementations.

According to the above technical solutions, the access point device is capable of transmitting the first signal. The first signal includes the first signal portion and the second signal portion, wherein the first signal portion and the second signal portion are transmitted over the conventional 802.11 radio interface and the zero-power radio interface, respectively. In this way, a non-zero-power device and a zero-power device may receive corresponding signals through the corresponding interfaces, such that compatibility between two terminals in one single communication signal is achieved.

### BRIEF DESCRIPTION OF DRAWINGS

FIG. 1 is a schematic diagram of a communication system architecture according to some embodiments of the present disclosure.
FIG. 2 is a schematic diagram of zero-power communication according to some embodiments of the present disclosure.
FIG. 3 is a schematic diagram of energy harvesting according to some embodiments of the present disclosure.
FIG. 4 is a schematic diagram of backscattering communication according to some embodiments of the present disclosure.
FIG. 5 is a circuit schematic diagram of resistance load modulation according to some embodiments of the present disclosure.
FIG. 6 is a schematic diagram of a frame format for an 802.11 data frame.
FIG. 7 is a schematic diagram of another frame format for an 802.11 data frame.
FIG. 8 is a schematic interaction diagram of a wireless communication method according to some embodiments of the present disclosure.
FIG. 9 is a schematic diagram of a frame format for a PPDU frame according to some embodiments of the present disclosure.
FIG. 10 is a schematic diagram of a frame format of another PPDU frame according to some embodiments of the present disclosure.
FIG. 11 is a schematic diagram of a frame format of yet another PPDU frame according to some embodiments of the present disclosure.
FIG. 12 is a schematic diagram of a frame format of yet still another PPDU frame according to some embodiments of the present disclosure.
FIG. 13 is a schematic interaction diagram of another wireless communication method according to some embodiments of the present disclosure.
FIG. 14 is a schematic diagram of a frame format of a PPDU frame according to some embodiments of the present disclosure.
FIG. 15 is a schematic diagram of backscattering according to some embodiments of the present disclosure.
FIG. 16 is a schematic diagram of backscattering according to some embodiments of the present disclosure.
FIG. 17 is a schematic block diagram of an access point device according to some embodiments of the present disclosure.
FIG. 18 is a schematic block diagram of a zero-power device according to some embodiments of the present disclosure.
FIG. 19 is a schematic block diagram of a communication device according to some embodiments of the present disclosure.
FIG. 20 is a schematic block diagram of a zero-power device according to some embodiments of the present disclosure.
FIG. 21 is a schematic block diagram of a communication device according to some embodiments of the present disclosure.
FIG. 22 is a schematic block diagram of a chip according to some embodiments of the present disclosure.
FIG. 23 is a schematic block diagram of a communication system according to some embodiments of the present disclosure.

### DETAILED DESCRIPTION

The technical solutions according to the embodiments of the present disclosure are described hereinafter in conjunction with the accompanying drawings for the embodiments of the present disclosure. The described embodiments are a part of the embodiments of the present disclosure but not all of them. With respect to the embodiments in this disclosure, all other embodiments acquired by those skilled in the art without creative efforts shall fall within protection scope of the disclosure.

The technical solutions according to the embodiments of the present disclosure are applicable to various communication systems, such as a wireless local area network (WLAN), a Wi-Fi system, or other communication systems.

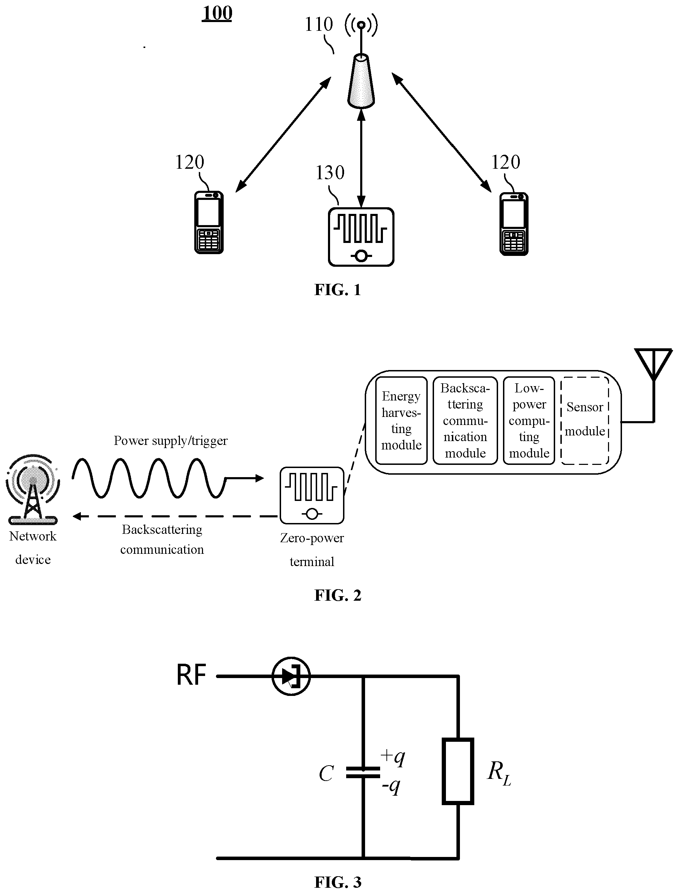

In some embodiments, a communication system 100 applied by the embodiments of the present disclosure is shown in FIG. 1. The communication system 100 includes an access point (AP) 110, and stations (STAs) 120, wherein the STA 120 accesses a network over the AP 110.

In some embodiments, the communication system 100 further includes a zero-power device 130.

In some scenarios, the AP is also referred to as an AP STA, i.e., in a sense, the AP is also an STA.

In some scenarios, the STA is also referred to as a non-AP STA.

Communication within the communication system 100 involves communication between an AP and a non-AP STA, communication between a non-AP STA and a non-AP STA, or communication between an STA and a peer STA. The peer STA refers to a device communicating with the STA at an opposite terminal, e.g., the peer STA could be an AP or a non-AP STA.

The AP functions as a bridge connecting a wired network and a wireless network, primarily serving to connect various wireless network clients together and then access the wireless network to the Ethernet. An AP device may a terminal device equipped with a Wi-Fi chip (e.g., a mobile phone) or a network device equipped with a Wi-Fi chip (e.g., a router).

It is understandable that a role of an STA in the communication system is not absolute. For example, in some scenarios, when a mobile phone connects to a router, the mobile phone acts as a non-AP STA. When the mobile phone serves as a hotspot for another mobile phone, the mobile phone acts as an AP.

Both the AP and the non-AP STA may be devices applied in the Internet of vehicles, nodes and sensors in the Internet of things (IoT), smart cameras, smart remotes, and smart water meters and electricity meters in smart homes, or sensors in smart cities.

In some embodiments, the non-AP STA supports the 802.11 technologies, which includes, but is not limited to, 802.11be, 802.11ax, 802.11ac, 802.11n, 802.11g, 802.11b, 802.11a, and various current and future wireless local area network (WLAN) technologies of the 802.11 series.

In some embodiments, the AP is a device that supports the 802.11 technologies, which includes but is not limited to, 802.11be, 802.11ax, 802.11ac, 802.11n, 802.11g, 802.11b, 802.11a, and various current and future WLAN technologies of the 802.11 series.

In some embodiments of the present disclosure, the STA is a device that supports WLAN or Wi-Fi technology such as a mobile phone, a tablet (pad), a computer, a virtual reality (VR) device, an augmented reality (AR) device, a wireless device in an industrial control, a wireless device in industrial control, a set-top box, a wireless device in self-driving, an in-vehicle communication device, a wireless device in remote medical, a wireless device in smart grid, a wireless device in transportation safety, a wireless device in smart city, a wireless device in smart home, a wireless communication chip/ASIC/SOC, or the like.

Frequency bands supported by the WLAN technology include, but are not limited to, low-frequency bands (e.g., 2.4 GHz, 5 GHz, or 6 GHz) and high-frequency bands (e.g., 60 GHz).

FIG. 1 illustrates one AP STA, two non-AP STAs, and one zero-power device as an example. In some embodiments, the communication system 100 includes a plurality of AP STAs, other numbers of non-AP STAs, and other numbers of zero-power devices, which are not limited in the embodiments disclosed herein.

It is understandable that devices with communication functions in the network/system in some embodiments of the present disclosure are referred to as communication devices. Taking the communication system 100 shown in FIG. 1 as an example, the communication devices further include other devices in the communication system 100, such as a network controller, a gateway, and other network entities, which are not limited in the embodiments disclosed therein.

It is understandable that the terms "system" and "network" are often used interchangeably herein. The term "and/or" herein is merely a way to describe an association relationship between associated objects, indicating that there are three possible relationships. For example, the phrase "A and/or B" means (A), (B), or (A and B). In addition, the symbol "/" herein generally indicates an "or" relationship between the associated objects.

It is understandable that the term "indication" mentioned in the embodiments of the present disclosure is a direct indication, an indirect indication, or an indication that there is an associated relationship. For example, A indicates B, which may mean that A indicates B directly, e.g., B is acquired by A; or that A indicates B indirectly, e.g., A indicates C, wherein B is acquired by C; or that an association relationship is present between A and B.

In the description of the embodiments of the present disclosure, the term "corresponding" may indicate a direct corresponding relationship or an indirect corresponding relationship between two items, or indicate an association relationship between two items, or indicate relationships such as indicating and being indicated, configuring and being configured, or the like.

In the embodiments of the present disclosure, the term "predefined" may be implemented by pre-storing a corresponding code, a table, or another manner that may indicate related information in a device (e.g., including an access point or a station), and the present disclosure does not limit the specific implementation thereof. For example, "predefined" refers to "defined" in a protocol.

To facilitate understanding of the technical solutions according to the embodiments of the present disclosure, the zero-power related technology of the present disclosure is described hereinafter.

### I. Zero-Power Communication

Zero-power communication utilizes energy harvesting and backscattering communication technologies. A zero-power communication network consists of network devices and zero-power devices.

As shown in FIG. 2, a network device (e.g., an access point device) is configured to transmit wireless energy supply signals and downlink communication signals to the zero-power device and receive backscatter signals from the zero-power device. A basic zero-power device includes an energy harvesting module, a backscattering communication module, and a low-power computing module. In addition, the zero-power device further includes a memory or a sensor, wherein the memory or the sensor is configured to store some basic information (e.g., item identifiers) or acquire sensing data such as ambient temperature, ambient humidity, or the like.

Key technologies in zero-power communication are described hereinafter.

### 1. RF Power Harvesting

As shown in FIG. 3, an RF power harvesting module achieves the harvesting of space electromagnetic wave energy based on the principle of electromagnetic induction, and then acquires the energy needed to drive a zero-power device, such as the energy for driving a low-power demodulation and modulation module and a sensor, and reading a memory. Therefore, the zero-power device does not require a conventional battery.

### 2. Backscattering Communication

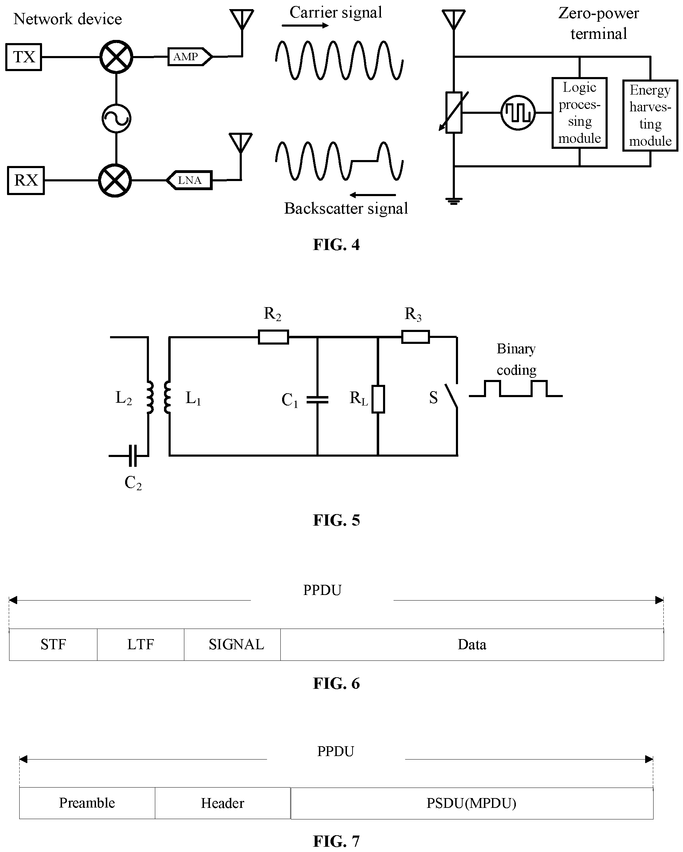

As shown in FIG. 4, a zero-power device receives a carrier signal from a network device, modulates the carrier signal, loads information to be transmitted, and radiates the modulated signal from an antenna. This information transmission process is referred to as backscattering communication. The functions of backscattering and load modulation are inextricably linked. The load modulation changes parameters such as magnitude of impedance of radio frequency identification by adjusting and controlling circuit parameters of an oscillation circuit of the zero-power device based on a beat of data flow, such that the modulation process is completed. The load modulation technology mainly includes two ways of resistance load modulation and capacitance load modulation. In the resistance load modulation, the load is connected in parallel with a resistor, and the resistor is on or off based on the control of binary data flow. As shown in FIG. 5. The on and off of the resistor results in a change in a circuit voltage, such that amplitude shift keying (ASK) is achieved. That is, the modulation and transmission of the signal are achieved by adjusting an amplitude magnitude of a backscatter signal of the zero-power device. Similarly, in the capacitance load modulation, a change in a resonant frequency of the circuit is achieved by switching on and off of a capacitor, such that frequency shift keying (FSK) is achieved. That is, the modulation and transmission of the signal are achieved by adjusting an operating frequency of a backscatter signal of the zero-power device.

Therefore, the zero-power device performs information modulation of arrival signals by load modulation, such that the backscattering communication process is achieved. Therefore, the zero-power device has significant advantages as follows.
(1) The device does not actively transmit signals, and thus does not require complex RF links such as PAs, RF filters, or the like.
(2) The device does not need to actively generate high-frequency signals, and thus does not require a high-frequency crystal oscillator.
(3) By the backscattering communication, the transmission of terminal signals does not need to consume energy from the terminal itself.

### 3. Coding Technology

In the data transmitted by radio frequency identification, the binary "1" and "0" may be expressed by different forms of code. The wireless radio frequency identification system usually uses one of the following coding methods: non-return-zero (NRZ) coding, Manchester coding, unipolar return zero coding, differential binary phase (DBP) coding, differential coding, pulse interval coding (PIE), bi-phase space coding (FM0), Miller coding, or the like. In general, different coding technologies use different pulse signals to represent 0 and 1.

In some scenarios, zero-power devices are categorized into the following types based on their energy source and the way they are used.

### 1. Passive Zero-Power Device

The zero-power device (e.g., a tag of an RFID system) does not require an internal battery. In the case that the zero-power device is close to a network device (e.g., a reader of the RFID system), the zero-power device is in the near-field formed by radiation of an antenna of the network device. Therefore, an antenna of the zero-power device generates an induced current through electromagnetic induction, and the induced current drives a low-power chip circuit of the zero-power device. The demodulation of a forward link signal and modulation of a reverse link signal are achieved. With respect to the backscatter link, the zero-power device achieves signal transmission by backscattering.

Evidently, the passive zero-power device does not need to be driven by the internal battery for either the forward link or the reverse link., and the passive zero-power device is a true zero-power device.

The passive zero-power device does not need batteries, and the RF circuit and baseband circuit of the passive zero-power device are very simple. For example, the passive zero-power device does not require devices such as a low noise amplifier (LNA), a power amplifier (PA), a crystal oscillator, an analog-to-digital converter (ADC), and the like, and thus the passive zero-power device has the advantages of small size, light weight, low prices, and long service life.

### 2. Semi-Passive Zero-Power Device

The semi-passive zero-power device does not install a conventional battery, but the semi-passive zero-power device is capable of harvesting radio wave energy by using the RF energy harvesting module, while storing the harvested energy in an energy storage unit (e.g., a capacitor). Upon acquiring energy, the energy storage unit is capable of driving a low-power chip circuit of the zero-power device. The demodulation of a forward link signal and modulation of a reverse link signal are achieved. With respect to the backscatter link, the zero-power device achieves signal transmission by backscattering.

Evidently, the semi-passive zero-power device does not need to be driven by the internal battery for either the forward link or the reverse link, and although the semi-passive zero-power device operates with energy stored in the capacitor, the energy is derived from radio energy harvested by the energy harvesting module, such that the semi-passive zero-power device a true zero-power device.

The semi-passive zero-power device inherits many of the advantages of the passive zero-power device. The semi-passive zero-power device has many advantages such as small size, light weight, low price, and long service life.

### 3. Active Zero-Power Device

In some scenarios, the zero-power device is the active zero-power device, and such a terminal has an internal battery. The battery is configured to drive a low-power chip circuit of the zero-power device. The demodulation of a forward link signal and modulation of a reverse link signal are achieved. With respect to the backscatter link, the zero-power device achieves signal transmission by backscattering. Therefore, the zero-power consumption of this type of terminal is mainly reflected in the fact that the signal transmission of the reverse link does not require the power of the terminal itself, but uses the backscattering.

### II. Cellular Passive IoT

With the increase of 5G industry applications, there are more and more types of connecting objects and application scenarios, and there will be higher requirements for the cost and power consumption of communication terminals. The application of battery-free and low-cost passive IoT devices has become a key technology for cellular IoT, thereby enriching the type and number of linked terminals of the 5G network and truly realizing the internet of everything. The passive IoT devices are based on zero-power communication technologies, such as the RFID technology, and extended on this basis to be applicable to the cellular IoT.

To facilitate understanding of the embodiments of the present disclosure, energy supply signals, scheduling signals, and carrier signals related to zero-power communication are described hereinafter.

### 1. Energy Supply Signal

The energy supply signal is an energy source for energy harvesting by the zero-power device.

A carrier of the energy supply signal may be a base station, a smartphone, a smart gateway, a charging station, a micro base station, an AP, or the like.

With respect to a frequency band, a frequency band of a radio wave used as the energy supply signal is low frequency, medium frequency, high frequency, or the like.

With respect to a waveform, a radio wave used as the energy supply signal is a sine wave, a square wave, a triangle wave, a pulse, a rectangular wave, or the like.

Additionally, the energy supply signal is a continuous wave or a non-continuous wave (i.e., allowing for a certain time interruption).

In some embodiments, the supply signal is an existing signal in the 3GPP standard, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), a Wi-Fi signal, or a Bluetooth signal.

In some embodiments, the power supply signal is a new signal, such as a new signal dedicated to power supply.

### 2. Triggering signal (also referred to as Scheduling Signal)

The triggering signal is configured to trigger or schedule the zero-power device for data transmission.

A carrier of the triggering signal is a base station, a smartphone, a smart gateway, a micro base station, an AP, or the like.

With respect to a frequency band, a radio wave used as the trigger signal or the scheduling signal is low frequency, medium frequency, high frequency, or the like.

With respect to a waveform, a radio wave used as the trigger signal or the scheduling signal is a sine wave, a square wave, a triangle wave, a pulse, a rectangular wave, or the like.

Additionally, the triggering signal is a continuous wave or a non-continuous wave (i.e., allowing for a certain time interruption).

In some embodiments, the triggering signal is an existing signal in the 3GPP standard, such as an SRS, a PUSCH, a PRACH, a PUCCH, a PDCCH, a PDSCH, a PBCH, a Wi-Fi signal, or a Bluetooth signal.

In some embodiments, the triggering signal is a new signal, such as a new signal dedicated to triggering or scheduling.

### 3. Carrier Signal

The carrier signal is configured to generate a backscatter signal by the zero-power device. For example, the zero-power device forms a backscatter signal by modulating a received carrier signal based on information that needs to be transmitted.

A carrier of the carrier signal is a base station, a smartphone, a smart gateway, a micro base station, an AP, or the like.

With respect to a frequency band, a radio wave used as the carrier signal operates in a low frequency, an intermediate frequency, a high frequency, or the like.

With respect to a waveform, a radio wave used as the carrier signal operates as a sine wave, a square wave, a triangle wave, a pulse, a rectangular wave, or the like.

Additionally, the carrier signal is a continuous wave or a non-continuous wave (i.e., allowing for a specific time interruption).

In some embodiments, the carrier signal is an existing signal in the 3GPP standard, such as an SRS, a PUSCH, a PRACH, a PUCCH, a PDCCH, a PDSCH, a PBCH, a Wi-Fi signal, or a Bluetooth signal.

In some embodiments, the carrier signal is a new signal, such as a new carrier signal dedicated to generating a backscatter signal.

It should be noted that in some embodiments of the present disclosure, the energy supply signal, the scheduling signal, and the carrier signal are the same signal or different signals. For example, the energy supply signal is used as the carrier signal, the scheduling signal is used as the carrier signal, and the like.

To facilitate understanding of the embodiments of the present disclosure, the unlicensed spectrum associated with the present disclosure is described hereinafter.

The unlicensed spectrum is a nationally and regionally delineated spectrum that is used for communication of radio devices, which is often considered as a shared spectrum. That is, communication devices in different communication systems may use the spectrum as long as they satisfy regulatory requirements set by the country or region in the spectrum, and there is no need to apply for a proprietary spectrum authorization from the government. To enable the friendly coexistence of various communication systems using the unlicensed spectrum for wireless communications in that spectrum, some countries or regions have stipulated the regulatory requirements that need to be met for use of the unlicensed spectrum. For example, in Europe, communication devices follow an LBT mechanism. That is, a communication device needs to perform channel listening prior to transmitting a signal on a channel of the unlicensed spectrum, and the communication device is capable of only transmitting the signal in the case that a result of the channel listening is that the channel is free; in the case that the result of the channel listening by the communication device on the channel of the unlicensed spectrum is that the channel is busy, the communication device fails to transmit the signal. Moreover, to ensure fairness, in one transmission, the duration of signal transmission by the communication device on the channel of the unlicensed spectrum shall not exceed the maximum channel occupation time (MCOT).

Current systems that use the unlicensed spectrum for communication include, for example, Wi-Fi and NR-based access to unlicensed spectrum (NR-U) technologies of 3GPP.

For ease of understanding of the embodiments of the present disclosure, the channel listening technologies related to the present disclosure are described hereinafter.

The principle of channel listening is that a communication device performs LBT on a carrier in the unlicensed spectrum upon arrival of a service and starts transmitting a signal on that carrier upon successful LBT. Different channel listening technologies are used for each of the different communication systems using the unlicensed spectrum, and these technologies simultaneously meet the regulatory requirements to ensure fairness in the use of the unlicensed spectrum by each communication system.

For example, with respect to a Wi-Fi system, the channel listening employs a carrier listening mechanism, including physical carrier listening and virtual carrier listening. A channel busy is determined in the case that an indicator of either carrier listening mechanism indicates that the channel is busy. The physical carrier listening employs three channel clear detection methods: energy detection, carrier sensing, and energy detection & carrier sensing, wherein these three channel idle detection methods are collectively referred to as clear channel assessment (CCA).
1. Energy Detection (ED). An energy magnitude of a received signal is judged. In the case that a power of the received signal is greater than a threshold value (ED _threshold) specified by a physical layer, the channel is considered to be occupied, and in the case that the power of the received signal is less than the ED_threshold, the channel is considered to be clear. Setting of the ED_threshold is related to a transmission power.
2. Carrier Sensing (CS). The carrier sensing identifies a preamble portion of a PLCP header of an 802.11 data frame. In 802.11, the preamble portion of the data frame is constructed by a specific sequence that is known to both the transmitter and receiver, and the preamble portion is used for frame synchronization and symbol synchronization. During an actual detection process, a node continuously samples channel signals and performs an autocorrelation operation or a cross-correlation operation based on the channel signals. Autocorrelation is commonly used in the 802.11 technology based on orthogonal frequency division multiplexing (OFDM) (e.g., 802.11a), while cross-correlation is commonly used in 802.11 technology based on direct sequence spread spectrum (DSSS) (e.g., 802.11a). Similar to the energy detection, a value of the correlation operation needs to be compared to a threshold. In the case that the value is greater than the threshold, it is determined that a signal is detected. In the case that the value is less than the threshold, it is determined that no signal is detected.
3. Energy Detection & Carrier Sensing (ED & CS). In 802.11, the detection technology is determined by the technology used in the physical layer. The DSSS technology combines the energy detection and the carrier sensing, while frequency-hopping spread spectrum (FHSS) technology uses only the carrier sensing. In the ED & CS, the channel is considered to be occupied in the case that a metric of either detection technology is detected to be over the limit.

Zero-power devices have a wide range of applications in cellular communication systems, such as passive IoT, due to their advantages of low cost, low complexity, and low power consumption. The use of unlicensed frequency bands is also an important deployment scenario in the cellular communication system. In the case that the zero-power device is applied in the Wi-Fi system, how to maintain compatibility with conventional Wi-Fi devices is an urgent problem.

To facilitate understanding of the embodiments of the present disclosure, the technical problems solved by the present disclosure are described hereinafter.

Due to different communication interfaces of the zero-power device and the conventional Wi-Fi device, the zero-power device fails to receive existing Wi-Fi signals in the Wi-Fi system, and the zero-power device fails to generate the Wi-Fi signals due to limited processing capability of the zero-power device. Thus, in the case that a new type of device is applied to the Wi-Fi system, the compatibility with conventional Wi-Fi devices is an issue to be considered.

For example, the conventional Wi-Fi device uses a carrier sensing mechanism for channel listening. The carrier sensing for the channel of the Wi-Fi device is based on a preamble signal portion of the physical layer header of the 802.11 data frame (e.g., physical layer convergence protocol (PLCP) protocol data unit (PPDU). However, backscattering of the zero-power device fails to generate this signal. In the case that the backscattering of the zero-power device fails to transmit the preamble signal, the conventional Wi-Fi terminal fails to detect that the zero-power device is using the channel by detecting the preamble signal, and thus the conventional Wi-Fi terminal may also use this channel for transmission, thereby causing an interference.

In some embodiments, the PPDU frame includes a physical layer header, and the physical layer header includes a preamble. FIG. 6 and FIG. 7 illustrate format diagrams of two typical PPDU frames. As shown in FIG. 6, the physical layer header of the PPDU frame of 802.11a/g includes a short training Field (STF), a long training field (LTF), and a signal field.

The STF is mainly composed of 10 short symbols (t1-t10), each of the symbols is 0.8us. The STF implements several functions, mainly including frame synchronization and coarse frequency synchronization. The main functions achieved by t1-t7 include signal detection, auto gain control (AGC), and diversity selection. The functions achieved by t8-t10 include coarse frequency, offset estimation, and timing synchronization. The LTF is mainly used for fine frequency synchronization and channel estimation. With respect to the carrier sensing, the Wi-Fi device uses the STF as the preamble and accomplishes the carrier sensing by performing an autocorrelation calculation or a cross-correlation calculation on the preamble.

As shown in FIG. 7, with respect to a PPDU frame of 802.11b, a physical layer header includes a preamble portion and a header portion. The preamble portion includes two portions, wherein the two portions are a synchronization (sync) and an SFD. The sync is configured to perform the frame synchronization, and the SFD is configured as a frame start identifier.

As shown in FIG. 7, this PPDU frame of 802.11b further includes a data portion, such as a PLCP service data unit (PSDU) or a medium access control (MAC) protocol data unit (MPDU).

To facilitate understanding of the technical solutions according to the embodiments of the present disclosure, the technical solutions of the present disclosure are described in detail hereinafter by embodiments. The above-related technologies may be arbitrarily combined with the technical solutions according to the embodiments of the present disclosure as optional solutions, all of which shall fall within the protection scope of the embodiments of the present disclosure. Some embodiments of the present disclosure include at least some of the following content.

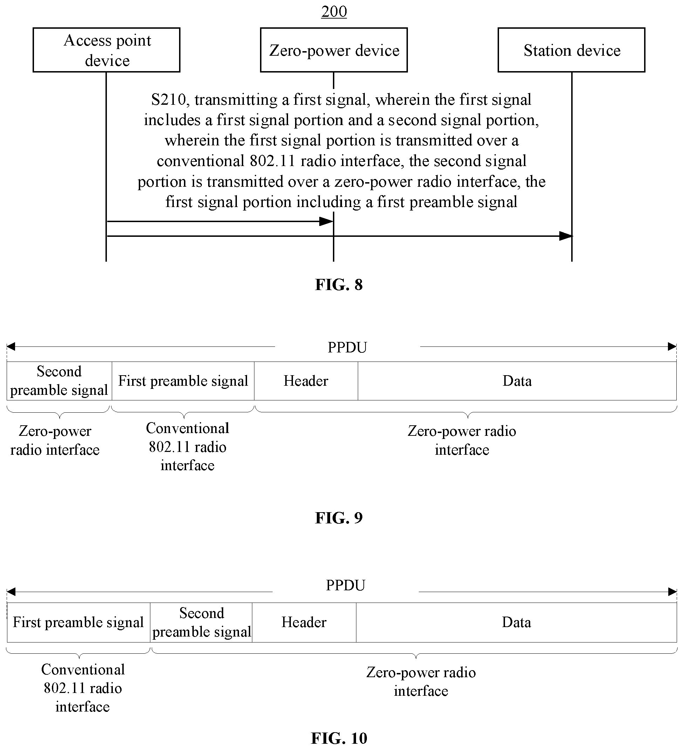

FIG. 8 is a schematic interactive diagram of a method 200 for wireless communication 200 according to some embodiments of the present disclosure. As shown in FIG. 8. The method 200 includes at least some of the following processes.

In S210, an access point device transmits a first signal, wherein the first signal includes a first signal portion and a second signal portion. The first signal portion is transmitted over a conventional 802.11 radio interface, and the second signal portion is transmitted over a zero-power radio interface, wherein the first signal portion includes a first preamble signal.

In some embodiments, a station device receives the first signal portion by the conventional 802.11 radio interface, and the zero-power device receives the second signal portion by the zero-power radio interface.

It should be noted that the specific categorization method of the zero-power device is not limited herein. For example, the zero-power device is categorized based on characteristics such as the complexity of the device, power supply method, communication method, modulation method, or the like. For example, the zero-power device is a device having at least one of the following characteristics: low complexity, support for ambient power supply, support for power supply from other devices, backscattering, or new waveforms (or simple waveforms).

It is understandable that the nomenclature of the zero-power device is not limited herein. For example, the zero-power device is also referred to as a zero-power terminal, a low-power device, a low-power terminal, an environmentally powered terminal, an energy harvesting based terminal, or the like.

It should also be noted that a source of energy of the zero-power device is not limited herein. For example, the energy is derived from an external environment, and in this case, the zero-power device is zero-power or low-power. Alternatively, the energy required for the operation of the zero-power device is derived from power supply of the zero-power device itself, and in this case, the zero-power device is a low-power terminal. Alternatively, the energy of the zero-power device is provided by a network device, for example, in a Wi-Fi system, the energy is provided by an access point device or a dedicated energy supply node, which is not limited herein.

In some embodiments, the zero-power device is configured with an energy harvesting module for energy harvesting, such as energy harvesting of radio waves and solar energy, and further storing the acquired energy in an energy storage unit. Upon acquiring sufficient energy, the energy storage unit drives a chip circuit in the terminal device to operate to perform operations such as demodulation for the forward link signal and modulation for the reverse link signal.

In some embodiments, the technical solutions according to the embodiments of the present disclosure are applied to an unlicensed spectrum or a licensed spectrum.

It is understandable that the technical solutions of embodiments of the present disclosure are applicable to a Wi-Fi system, a WLAN system, or other communication systems that require consideration of compatibility between zero-power devices and conventional terminals, which is not limited herein.

For example, in the case that the zero-power device is introduced into a communication system, two portions are included in a signal transmitted by a network device in the communication system. A first signal portion is transmitted over a conventional communication interface (e.g., a Uu interface) between the network device and the terminal device, and a second signal portion is transmitted over the zero-power radio interface.

Correspondingly, the terminal device in the communication system receives the first signal portion by the conventional communication interface, and the zero-power device receives the second signal portion over the zero-power radio interface, such that compatibility between the two types of terminals in the communication system is achieved.

In some embodiments, the communication system includes but is not limited to, a global system of mobile communication (GSM) system, a code division multiple access (CDMA) system, a wideband code division multiple access (WCDMA) system, a general packet radio service (GPRS), a long-term evolution (LTE) system, an advanced long-term evolution (LTE-A) system, a new radio (NR) system, an NR evolution system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), a Wi-Fi system, a 5th Generation (5G) system, or other communication systems.

In some embodiments, the network device is an AP in the WLAN system or Wi-Fi system, a base transceiver station (BTS) in the GSM or CDMA, a NodeB (NB) in the WCDMA, an evolutional NodeB (eNB or eNodeB) in the LTE, a repeater station or access point, an in-vehicle device, a wearable device, a network device in an NR network (gNB), a network device in a future evolved public land mobile network (PLMN), or a network device in a non-terrestrial network (NTN).

In some embodiments, the terminal device is an STA in the WLAN system or Wi-Fi system, a cellular phone, a cordless phone, a Session Initiation Protocol (SIP) phone, a wireless local loop (WLL) station, a personal digital assistant (PDA), a handheld device with wireless communication function, a computing device or other processing devices connected to a wireless modem, an in-vehicle device, a wearable device, a terminal device in a next-generation communication system such as the NR network, or a terminal device in the future evolved PLMN.

The description is given hereinafter using a scenario where the zero-power device is applicable to a Wi-Fi system as an example. In the case that the zero-power device is applicable to other communication systems, the implementation is similar and not repeated herein.

In some embodiments, the access point device is a device that supports the 802.11 technology.

In some embodiments, the station device is a device that supports the 802.11 technology, such as a Wi-Fi device.

In some embodiments, the 802.11 technology includes, but is not limited to, 802.11be, 802.11ax, 802.11ac, 802.11n, 802.11g, 802.11b, 802.11a, and a variety of current and future WLAN technologies of the 802.11 series.

In some embodiments, the conventional 802.11 radio interface includes an interface for communication between the access point device and the station device. That is, the station device and the access point device communicate with each other by the conventional 802.11 radio interface.

In some embodiments, the conventional 802.11 radio interface refers to a communication interface that supports the 802.11 technology.

In some embodiments, the zero-power radio interface refers to a communication interface used for zero-power communication, or a communication interface used for communication between the zero-power device and other devices. For example, the zero-power radio interface is configured to carry information transmitted by the zero-power device to other devices, or to carry information transmitted by other devices to the zero-power device.

In some embodiments, the zero-power communication is related to characteristics such as a way that the signal is modulated, a way that the signal is transmitted, the complexity of the device, a way that the device is powered, or the power consumption of the device. For example, a signal implementing the zero-power communication is modulated using a low complexity modulation method such as ASK, the reverse link of the device performing the zero-power communication transmits the signal using backscattering, the device performing the zero-power communication is a low-complexity or low-cost device, the device performing the zero-power communication supports ambient power supply or power supply from other devices, the device performing the zero-power communication is a low-power or zero-power device, or the like.

In some embodiments, the zero-power communication includes backscattering communication, or other passive or semi-passive communication methods. The description is given using the backscattering communication as an example, but the present disclosure is not limited thereto.

It is understandable that in some embodiments of the present disclosure, the conventional 802.11 radio interface refers to an interface for communication between the access point device and the conventional station device prior to introduction of the zero-power device, and upon introduction of the zero-power device, the zero-power device is also considered as a type of station device. In this case, the communication interface between the zero-power device and the access point device (i.e., the zero-power radio interface) is considered an extended 802.11 radio interface.

In some embodiments, the first signal portion and the second signal portion employ different waveforms.

For example, a first preamble signal employs a signal waveform supported by the conventional 802.11 radio interface, such as an OFDM-modulated waveform.

For example, the second signal portion employs a signal waveform supported by the zero-power radio interface, such as an amplitude shift keying (ASK) modulated waveform.

In some embodiments, because the zero-power device has the characteristic of low complexity and only supports simple modulation methods, such as ASK modulation, the zero-power device fails to implement OFDM modulation supported by the Wi-Fi device. As a result, the zero-power communication employ a waveform different from the OFDM-based waveform.

In some embodiments, the first preamble signal is configured for carrier sensing.

In some embodiments, the first preamble signal includes an STF of a physical layer header of 802.11a/g, or the STF and an LTF of the physical layer header of 802.11a/g, or the STF, the LTF and a SIGNAL of the physical layer header of 802.11a/g.

In some embodiments, the first preamble signal includes a preamble of a physical layer header of 802.11b or a preamble and a header of the physical layer header of 802.11b.

In some embodiments, the first signal portion further includes a header signal and/or a data signal.

In some embodiments, the second signal portion includes at least one of: a second preamble signal, a header signal, or a data (payload) signal.

In some embodiments, the zero-power device determines a resource location of the first signal portion based on a resource location of the second signal portion.

For example, the zero-power device determines a location of the first signal portion in a time domain based on a location of the second signal portion in the time domain.

For another example, the zero-power device determines a location of the first preamble signal in a time domain based on a location of the second preamble signal in the time domain.

In some embodiments, the second signal portion includes first indication information, wherein the first indication information indicates the resource location of the first signal portion.

Accordingly, upon receiving the second signal portion, the zero-power device determines the resource location of the first signal portion based on the first indication information in the second signal portion, and then receives the first signal portion based on the resource location of the first signal portion.

In some embodiments, the zero-power device performs backscattering based on the received first signal portion, such that a backscatter signal of the zero-power device also includes a preamble signal, and thus a non-zero-power device (e.g., a conventional Wi-Fi device) detects that the zero-power device is using the channel based on that preamble signal.

In some embodiments, a location relationship between the resource location of the first signal portion and the resource location of the second signal portion is predefined or configured by the access point device. That is, the access point device and the zero-power device have a common understanding of the location relationship between the first signal portion and the second signal portion.

In some embodiments, a first offset is present between the resource location of the first signal portion and the resource location of the second signal portion.

For example, the first offset is present between the location of the first preamble signal in the time domain and the location of the second preamble signal in the time domain.

In some embodiments, the first offset is predefined or configured by the access point device.

In some embodiments, the second signal portion precedes the first signal portion in the time domain. For example, the second preamble signal precedes the first preamble signal in the time domain.

It is understandable that the specific signal composition and signal structure of the first signal are not limited herein, as long as the transmitter and the receiver of the first signal have a consistent understanding of the signal composition and signal structure of the first signal.

In some embodiments, the first signal is a PPDU frame.

An exemplary implementation of a frame structure of the first signal according to some embodiments of the present disclosure is illustrated in conjunction with FIG. 9 to FIG. 12, but the present disclosure is not limited thereto.

As shown in FIG. 9, the first signal is a PPDU frame, wherein the PPDU frame includes the second preamble signal transmitted over the zero-power radio interface, the first preamble signal transmitted over the conventional 802.11 radio interface, and the header and payload transmitted over the zero-power radio interface.

As shown in FIG. 10, the first signal is a PPDU frame, wherein the PPDU frame includes the first preamble signal transmitted over the conventional 802.11 radio interface, and the second preamble signal, the header, and the payload that are transmitted over the zero-power radio interface.

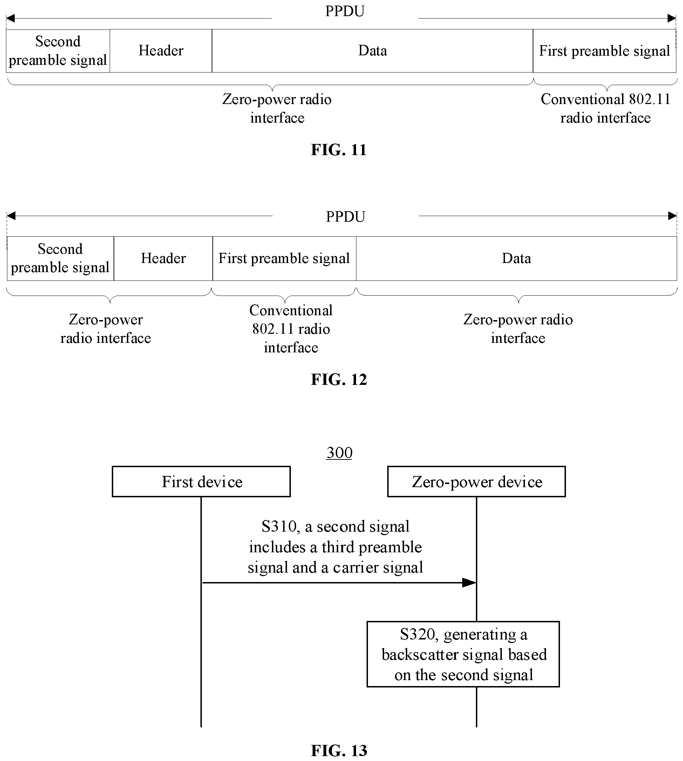

As shown in FIG. 11, the first signal is a PPDU frame, wherein the PPDU frame includes the second preamble signal, the header, and the payload that are transmitted over the zero-power radio interface, and the first preamble signal transmitted over the conventional 802.11 radio interface.

As shown in FIG. 12, the first signal is a PPDU frame, wherein the PPDU frame includes the second preamble signal and the header transmitted over the zero-power radio interface, the first preamble signal transmitted over the conventional 802.11 radio interface, and the payload transmitted over the zero-power radio interface.

In summary, in some embodiments of the present disclosure, the access point device is capable of transmitting the first signal, wherein the first signal includes the first signal portion and the second signal portion. The first signal portion and the second signal portion are transmitted over the conventional 802.11 radio interface and the zero-power radio interface, respectively. In this way, the non-zero-power device and the zero-power device are capable of receiving corresponding signals by corresponding interfaces, such that compatibility between the two types of terminals in one communication system is achieved.

FIG. 13 is a schematic interactive diagram of another method 300 for wireless communication according to some embodiments of the present disclosure. As shown in FIG. 13. The method 300 includes at least some of the following processes.

In S310, a first device (also referred to as a carrier transmitting device) transmits a second signal, wherein the second signal includes a third preamble signal and a carrier signal.

Correspondingly, the zero-power device receives the second signal.

In S320, the zero-power device generates a backscatter signal based on the second signal.

It should be noted that the specific categorization method of the zero-power device is not limited herein. For example, the zero-power device is categorized based on characteristics such as the complexity of the device, the energy supply method, the communication method, the modulation method, and the like. For example, the zero-power device is a device having at least one of the following characteristics: low complexity, support for ambient power supply, support for power supply from other devices, backscattering, or new waveforms (or simple waveforms).

It is understandable that the nomenclature of the zero-power device is not limited herein. For example, the zero-power device is also referred to as a zero-power terminal, a low-power device, a low-power terminal, an environmentally powered terminal, an energy harvesting-based terminal, or the like.

It should also be noted that the source of energy of the zero-power device is not limited herein. For example, the energy is derived from an external environment, and in this case, the zero-power device is zero-power or low-power. Alternatively, the energy required for the operation of the zero-power device is derived from power supply of the zero-power device itself, and in this case, the zero-power device is a low-power terminal. Alternatively, the energy of the zero-power device is provided by a network device, for example, in a Wi-Fi system, the energy is provided by an access point device or a dedicated energy supply node, which is not limited herein.

In some embodiments, the zero-power device is configured with an energy harvesting module for energy harvesting, such as energy harvesting of radio waves and solar energy, and further storing the acquired energy in an energy storage unit. Upon acquiring sufficient energy, the energy storage unit drives a chip circuit in the terminal device to operate to perform operations such as demodulation for the forward link signal and modulation for the reverse link signal.

It is understandable that the technical solutions according to the embodiments of the present disclosure are applied to a Wi-Fi system, a WLAN system, or other communication systems, such as an NR system, an LTE system, or the like, which is not limited herein.

In some embodiments, the technical solutions of embodiments of the present disclosure are applied to an unlicensed spectrum or a licensed spectrum.

In some embodiments, the first device is any device capable of actively transmitting a signal. For example, the first device is a network device, such as a base station in a cellular communication system or an access point device in a WLAN system, or a terminal device, such as a UE in a cellular communication system or a station device in a WLAN, or a dedicated carrier transmitting device, which is not limited herein.

In some embodiments, the third preamble signal employs a signal waveform supported by a conventional 802.11 radio interface, such as OFDM.

In some embodiments, the conventional 802.11 radio interface includes an interface for communication between the access point device and the station device.

In some embodiments, the conventional 802.11 radio interface refers to a communication interface that supports the 802.11 technology.

In some embodiments, the backscatter signal includes a fourth preamble signal and a zero-power radio frame.

In some embodiments, the fourth preamble signal is acquired by backscattering the third preamble signal.

For example, the zero-power device is capable of acquiring the fourth preamble signal by reflecting the third preamble signal directly without modulation.

In some embodiments, the zero-power radio frame is acquired by backscattering the carrier signal.

For example, the zero-power device acquires the zero-power radio frame by modulating the carrier signal and carrying information transmitted to a target device (e.g., the access point device or the station device).

In some embodiments, the zero-power radio frame is transmitted over the zero-power radio interface.

In some embodiments, the zero-power radio interface refers to a communication interface for zero-power communication or a communication interface for communication between the zero-power device and other devices, i.e., the zero-power radio interface is configured to carry information transmitted by the zero-power device to other devices or to carry information transmitted by other devices to the zero-power device.

In some embodiments, the zero-power communication is related to characteristics such as modulation method of the signal is modulated, transmission method of the signal, the complexity of the device, power supply method of the device, or the power consumption of the device. For example, a signal implementing the zero-power communication is modulated using a low complexity modulation method such as ASK, the reverse link of the device performing the zero-power communication transmits the signal using backscattering, the device performing the zero-power communication is a low-complexity or low-cost device, the device performing the zero-power communication supports ambient power supply or power supply from other devices, the device performing the zero-power communication is a low-power or zero-power device, or the like.

It is understandable that in some embodiments of the present disclosure, the conventional 802.11 radio interface refers to an interface for communication between the access point device and the conventional station device prior to the introduction of the zero-power device, and upon the introduction of the zero-power device, the zero-power device is also considered to be a type of station device. In this case, the communication interface between the zero-power device and the access point device (i.e., the zero-power radio interface) is considered an extended 802.11 radio interface.

In some embodiments, the fourth preamble signal is configured for carrier sensing.

In some embodiments, the fourth preamble signal employs a signal waveform supported by the conventional 802.11 radio interface, such as an OFDM-modulated waveform.

Thus, in some embodiments of the present disclosure, the zero-power device performs the backscattering by the preamble signal from the physical layer portion of the 802.11 data frame transmitted by the carrier transmitting device, such that the backscatter signal of the zero-power device also includes the signal waveform supported by the conventional 802.11 radio interface, and thus the non-zero-power device (e.g., a Wi-Fi device) is capable of performing the carrier sensing based on the preamble signal.

In some embodiments, the zero-power radio frame employs a signal waveform supported by the zero-power radio interface, such as an ASK-modulated waveform.

In some embodiments, the zero-power radio frame includes at least one of the following signals: a preamble signal (noted as a fifth preamble signal), a header signal, or a data signal.

In some embodiments, the backscatter signal is a PPDU frame.

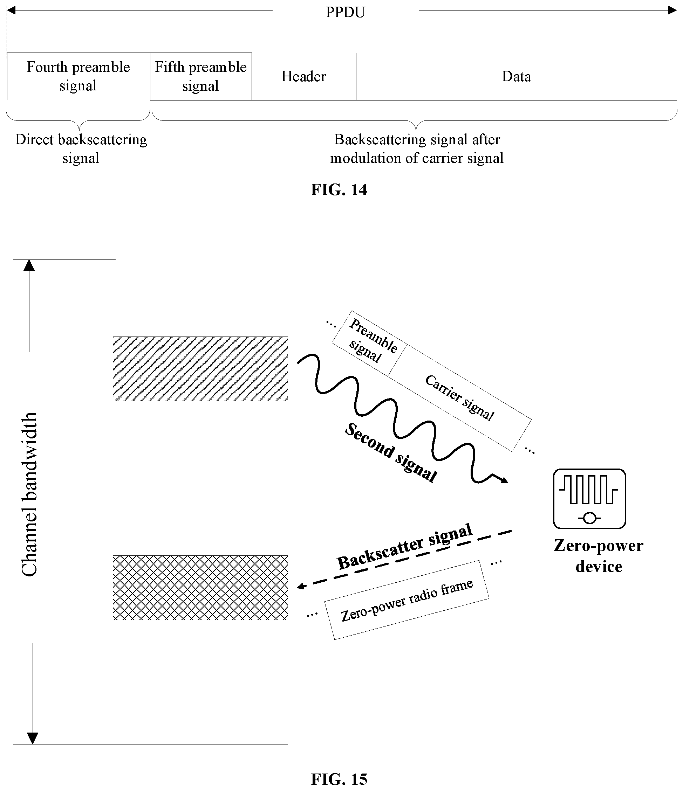

In conjunction with FIG. 14, an exemplary implementation of a frame structure of the backscatter signal according to embodiments of the present disclosure is illustrated, but the present disclosure is not limited thereto.

As shown in FIG. 14, the backscatter signal is a PPDU frame, wherein the PPDU frame includes the fourth preamble signal, the fifth preamble signal, the header, and the data portion. The fourth preamble signal is acquired by performing direct backscattering on the third preamble signal, and the fifth preamble signal, the header, and the data portion are acquired by modulating the carrier signal and then backscattering the modulated carrier signal.

It is understandable that the specific manner of determining locations of the third preamble signal and the carrier signal in the second signal are not limited in the present disclosure, as long as the first device and the zero-power device share the same understanding of the locations of the third preamble signal and the carrier signal in the second signal.

In some embodiments, the location of the third preamble signal and/or the carrier signal in the second signal is indicated by the first device, predefined, or configured by the network device. For example, the network device indicates the locations of the third preamble signal and the carrier signal in the second signal to the first device and the zero-power device.

In some embodiments, the second signal includes second indication information, wherein the second indication information indicates the location of the third preamble signal or the carrier signal in the second signal.

In some embodiments, a second offset is present between a location of the third preamble signal in a time domain and a location of the carrier signal in the time domain. For example, the second offset is predefined or configured by the network device.

In some embodiments, the third preamble signal precedes the carrier signal in the time domain, or the third preamble signal follows the carrier signal in the time domain.

In some embodiments, the third preamble signal corresponds to the first preamble signal in the method 200, the carrier signal corresponds to the second signal portion in the method 200, and the design of the frame structure of the second signal is referred to the designs of the frame structures of the PPDUs in FIG. 9 to FIG. 12.

In some embodiments of the present disclosure. The method 300 further includes:
determining, by the zero-power device, whether to perform backscattering on the third preamble signal based on whether a channel for transmitting the second signal and a channel for transmitting the backscatter signal share the same channel bandwidth.

In some embodiments, the zero-power device does not perform the backscattering on the third preamble signal in the case that the channel for transmitting the second signal and the channel for transmitting the backscatter signal share the same channel bandwidth.

For example, because the carrier transmitting device needs to perform channel listening and acquire channel occupancy when transmitting the second signal, in the case that the resources for transmitting the second signal and the backscatter signal in a frequency domain share the same channel bandwidth, the backscattering of the zero-power device does not need to perform channel listening. The second signal includes the preamble signal and the carrier signal, and instead of performing the backscattering on the preamble signal, the zero-power device only generates the backscatter signal by modulating the carrier signal in the second signal. That is, the backscatter signal includes only the zero-power radio frame. The second signal includes the preamble signal and the second signal and the backscatter signal belong to the same channel bandwidth, which is equivalent to the fact that a backscatter signal on the channel for transmitting the backscatter signal also includes the preamble signal. In this case, the non-zero-power device determines that the channel is being utilized by performing the carrier sensing based on the backscatter signal, thereby ensuring the accuracy of the carrier sensing.

FIG. 15 is a schematic diagram of a signal composition of a backscatter signal in the case that the channel for transmitting the second signal and the channel for transmitting the backscatter signal share the same channel bandwidth.

In some other embodiments, the zero-power device performs the backscattering on the third preamble signal in the case that the channel for transmitting the second signal and the channel for transmitting the backscatter signal do not share the same channel bandwidth.

For example, because the carrier transmitting device needs to perform channel listening and acquire channel occupancy when transmitting the second signal, in the case that the resources for transmitting the second signal and the backscatter signal in the frequency domain employ different channel bandwidths, the zero-power device needs to perform listening, such as listening based on energy detection, on the channel for transmitting the backscatter signal. Upon determining that the channel is clear, backscatter signal is transmitted over the channel. In this case, the zero-power device needs to perform the backscattering on the preamble signal in the second signal, such that a backscatter signal on the channel for transmitting the backscatter signal also includes a preamble portion. In this case, the non-zero-power device is capable of determining that the channel is being used by performing carrier sensing based on the backscatter signal, such that the accuracy of the carrier sensing is ensured.

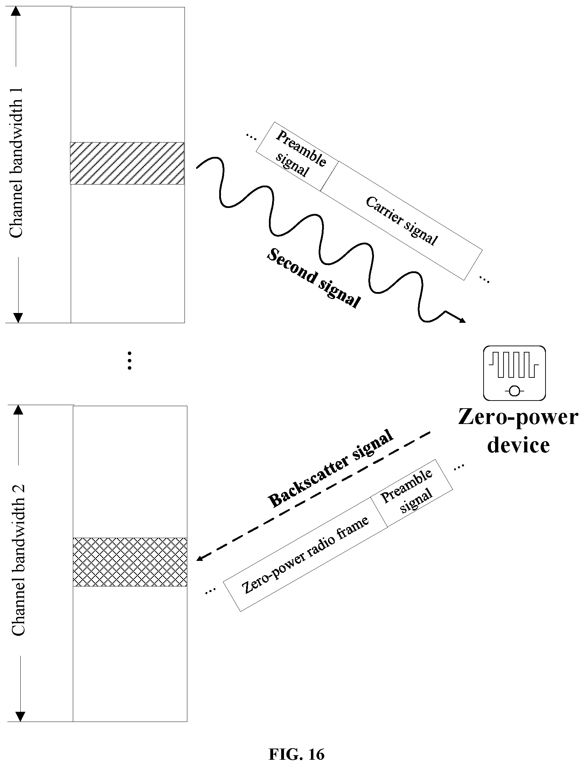

FIG. 16 is a schematic diagram of a signal composition of a backscatter signal in the case that the channel for transmitting the second signal and the channel for transmitting the backscatter signal employ different channel bandwidths.

That is, in the case that the channel for transmitting the second signal and the channel for transmitting the backscatter signal share the same channel bandwidth, the backscatter signal includes the zero-power radio frame; or in the case that the channel for transmitting the second signal and the channel for transmitting the backscatter signal do not share the same channel bandwidth, the backscatter signal includes the fourth preamble signal and the zero-power radio frame.

In some embodiments, the zero-power device determines whether to perform backscattering on the third preamble signal based on the third indication information of the access point device, wherein the third indication information indicates whether to perform backscattering on the third preamble signal.

In some embodiments, the third indication information is carried in the second signal.

In some embodiments, the first device is the access point device.

Thus, in some embodiments of the present disclosure, the carrier transmitting device is capable of transmitting the second signal, wherein the second signal includes the preamble signal and the carrier signal. Further, the zero-power device performs backscattering based on the second signal, which is equivalent to the fact that the backscatter signal of the zero-power device also includes the preamble signal, and thus the non-zero-power device (e.g., the Wi-Fi device) performs carrier sensing based on the preamble signal, which helps to ensure the accuracy of carrier sensing.

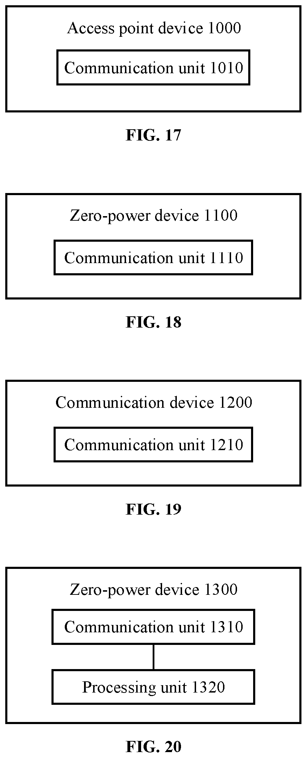

Method embodiments of the present disclosure are described in detail above in conjunction with FIGS. 8 to 16, and device embodiments of the present disclosure are described in detail hereinafter in conjunction with FIGS. 17 to 23. It is understandable that the device embodiments and the method embodiments correspond to each other, and similar descriptions may be referred to the method embodiments.

FIG. 17 illustrates a schematic block diagram of an access point device 1000 according to some embodiments of the present disclosure.

As shown in FIG. 17, the access point device 1000 includes: a communication unit 1010, configured to transmit a first signal, wherein the first signal includes a first signal portion and a second signal portion. The first signal portion is transmitted over a conventional 802.11 radio interface, and the second signal portion is transmitted over a zero-power radio interface, wherein the first signal portion includes a first preamble signal.

In some embodiments, the second signal portion includes at least one of: a second preamble signal, a header signal, or a data signal.

In some embodiments, the second signal portion includes first indication information, wherein the first indication information indicates a resource location of the first signal portion.

In some embodiments, a first offset is present between the resource location of the first signal portion and a resource location of the second signal portion.

In some embodiments, the first offset is predefined or configured by the access point device.

In some embodiments, the second signal portion precedes the first signal portion in a time domain.

In some embodiments, the first preamble signal is configured for carrier sensing.

In some embodiments, the first preamble signal employs a signal waveform supported by the conventional 802.11 radio interface.

In some embodiments, the second signal portion employs a signal waveform supported by the zero-power radio interface.

In some embodiments, the communication unit is a communication interface or transceiver, or an input/output interface of a communication chip or system-on-chip. The processing unit described above includes one or more processors.

It is understandable that the access point device 1000 according to some embodiments of the present disclosure corresponds to the access point device in the method embodiments of the present disclosure, and the above and other operations and/or functions of the various units in the access point device 1000 achieve the corresponding processes of the access point device in the methods illustrated in FIGS. 8 to 12, which are not repeated herein for brevity.

FIG. 18 illustrates a schematic block diagram of a zero-power device 1100 according to some embodiments of the present disclosure.

As shown in FIG. 18, the zero-power device 1100 includes: a communication unit 1110, configured to receive a second signal portion in a first signal by a zero-power radio interface, wherein the first signal includes a first signal portion and the second signal portion, the first signal portion being transmitted over a conventional 802.11 radio interface, and the first signal portion including a first preamble signal.

In some embodiments, the second signal portion includes at least one of: a second preamble signal, a header signal, or a data signal.

In some embodiments, the second signal portion includes first indication information, wherein the first indication information indicates a resource location of the first signal portion.

In some embodiments, the resource location of the first signal portion has a first offset relative to a resource location of the second signal portion.

In some embodiments, the first offset is predefined or configured by the access point device.

In some embodiments, the second signal portion precedes the first signal portion in a time domain.

In some embodiments, the first preamble signal is configured for carrier sensing.

In some embodiments, the first preamble signal employs a signal waveform supported by the conventional 802.11 radio interface.

In some embodiments, the second signal portion employs a signal waveform supported by the zero-power radio interface.

In some embodiments, the first signal is transmitted by the access point device.

In some embodiments, the communication unit is a communication interface or transceiver, or an input/output interface to a communication chip or system-on-chip. The processing units described above includes one or more processors.

It is understandable that the zero-power device 1100 according to some embodiments of the present disclosure corresponds to the zero-power device in the method embodiments of the present disclosure, and that the above and other operations and/or functions of the various units of the zero-power device 1100 achieve the corresponding processes of the zero-power device in the methods shown in FIGS. 13 to 16, which are not repeated herein for brevity.

FIG. 19 illustrates a schematic block diagram of a communication device 1200 according to some embodiments of the present disclosure.

As shown in FIG. 19, the communication device 1200 includes: a communication unit 1210, configured to transmit a second signal, wherein the second signal includes a third preamble signal and a carrier signal, and the second signal is configured for a zero-power device generating a backscatter signal.

In some embodiments, the second signal includes second indication information, wherein the second indication information indicates locations of the third preamble signal and the carrier signal in the second signal.

In some embodiments, the backscatter signal includes a fourth preamble signal and a zero-power radio frame; or the backscatter signal includes a zero-power radio frame.

In some embodiments, the fourth preamble signal is acquired by backscattering the third preamble signal, and the zero-power radio frame is acquired by backscattering the carrier signal.

In some embodiments, the zero-power radio frame includes at least one of: a preamble signal, a header signal, or a data signal.

In some embodiments, the third preamble signal employs a signal waveform supported by the conventional 802.11 radio interface.

In some embodiments, the zero-power radio frame employs a signal waveform supported by the zero-power radio interface.

In some embodiments, the zero-power radio frame is transmitted over the zero-power radio interface.

In some embodiments, the communication device is an access point device or a station device.

In some embodiments, the communication unit is a communication interface or transceiver, or an input/output interface of a communication chip or system-on-chip. The processing units described above includes one or more processors.

It is understandable that the communication device 1200 according to some embodiments of the present disclosure corresponds to the first device in the method embodiments of the present disclosure, and that the above and other operations and/or functions of the various units of the communication device 1200 achieve the corresponding processes of the first device in the method shown in FIGS. 13 to 16, which are not repeated herein for brevity.

FIG. 20 illustrates a schematic block diagram of a zero-power device 1300 according to some embodiments of the present disclosure.

As shown in FIG. 20, the zero-power device 1300 includes: a communication unit 1310, configured to receive a second signal, wherein the second signal includes a third preamble signal and a carrier signal; and
a processing unit 1320, configured to generate a backscatter signal based on the second signal.

In some embodiments, the second signal includes second indication information, wherein the second indication information indicates locations of the third preamble signal and the carrier signal in the second signal.

In some embodiments, the backscatter signal includes a fourth preamble signal and a zero-power radio frame; or the backscatter signal includes a zero-power radio frame.

In some embodiments, the fourth preamble signal is acquired by backscattering the third preamble signal, and the zero-power radio frame is acquired by backscattering the carrier signal.

In some embodiments, the zero-power radio frame includes at least one of: a preamble signal, a header signal, or a data signal.

In some embodiments, the backscatter signal includes the zero-power radio frame in the case that a channel for transmitting the second signal and a channel for transmitting the backscatter signal share the same channel bandwidth; or
the backscatter signal includes the fourth preamble signal and the zero-power radio frame in the case that the channel for transmitting the second signal and the channel for transmitting the backscatter signal do not share the same channel bandwidth.

In some embodiments, the zero-power device 1300 further includes:
a processing unit, configured to determine whether to perform backscattering on the third preamble signal based on whether the channel for transmitting the second signal and the channel for transmitting the backscatter signal share the same channel bandwidth.

In some embodiments, the processing unit is further configured to:
determine not to perform backscattering on the third preamble signal in the case that the channel for transmitting the second signal and the channel for transmitting the backscatter signal share the same channel bandwidth; or
determine to perform backscattering on the third preamble signal in the case that the channel for transmitting the second signal and the channel for transmitting the backscatter signal do not share the same channel bandwidth.

In some embodiments, the third preamble signal employs a signal waveform supported by the conventional 802.11 radio interface.

In some embodiments, the zero-power radio frame is transmitted over the zero-power radio interface.

In some embodiments, the second signal is transmitted by an access point device or a station device.

In some embodiments, the communication unit is a communication interface or transceiver, or an input/output interface of a communication chip or system-on-chip. The processing units described above includes one or more processors.

It is understandable that the zero-power device 1300 according to some embodiments of the present disclosure may correspond to the zero-power device in the method embodiments of the present disclosure, and the above and other operations and/or functions of the various units of the zero-power device 1300 achieve the corresponding processes of the zero-power device in the methods shown in FIGS. 13 to 16, which are not repeated herein for brevity.

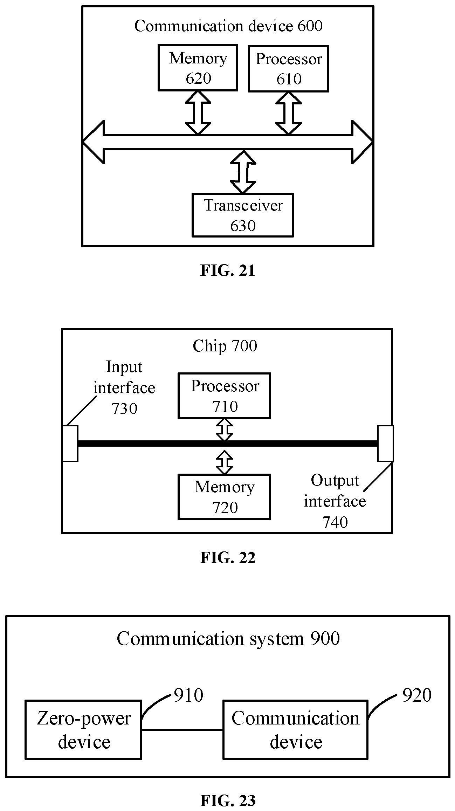

FIG. 21 is a schematic structural diagram of a communication device 600 according to some embodiments of the present disclosure. The communication device 600 shown in FIG. 21 includes a processor 610. The processor 610, when calling and running at least one computer program from a memory, is caused to perform the methods according to the embodiments of the present disclosure.

In some embodiments, as shown in FIG. 21, the communication device 600 further includes a memory 620. The processor 610, when calling and running at least one computer program from the memory 620, is caused to perform the methods according to the embodiments of the present disclosure.

The memory 620 is a separate device from the processor 610, or the memory 620 is integrated into the processor 610.

In some embodiments, as shown in FIG. 21, the communication device 600 further includes a transceiver 630, wherein the transceiver 630 is controlled by the processor 610 to communicate with other devices. In some embodiments, the transceiver 630 transmits information or data to other devices or receives information or data transmitted by other devices.

The transceiver 630 includes a transmitter and a receiver. In some embodiments, the transceiver 630 further includes one or more antennas.

In some embodiments, the communication device 600 is the zero-power device according to the embodiments of the present disclosure, and the communication device 600 achieves the corresponding processes achieved by the zero-power device in the various methods according to the embodiments of the present disclosure, which are not repeated herein for brevity.

In some embodiments, the communication device 600 is the access point device according to the embodiments of the present disclosure, and the communication device 600 achieves the corresponding processes achieved by the access point device in the various methods according to the embodiments of the present disclosure, which are not repeated herein for brevity.

In some embodiments, the communication device 600 is the first device according to the embodiments of the present disclosure, and the communication device 600 achieves the corresponding processes achieved by the first device in the various methods according to the embodiments of the present disclosure, which are not repeated herein for brevity.

FIG. 22 is a schematic structural diagram of a chip according to some embodiments of the present disclosure. The chip 700 shown in FIG. 22 includes a processor 710. The processor 710, when calling and running at least one computer program from a memory, is caused to perform the methods according to the embodiments of the present disclosure.

In some embodiments, as shown in FIG. 22, the chip 700 further includes a memory 720. The processor 710, when calling and running at least one computer program from the memory 720, is caused to perform the methods according to the embodiments of the present disclosure.

The memory 720 is a separate device from the processor 710, or the memory 720 is integrated into the processor 710.

In some embodiments, the chip 700 further includes an input interface 730. The processor 710 is capable of controlling the input interface 730 to communicate with other devices or chips. For example, the processor 710 controls the input interface 730 to acquire information or data transmitted by other devices or chips.

In some embodiments, the chip 700 further includes an output interface 740. The processor 710 is capable of controlling the output interface 740 to communicate with the other device or chip. For example, the processor 710 controls the output interface 740 to output information or data to other devices or chips.

In some embodiments, the chip is applied to the zero-power device according to the embodiments of the present disclosure, and the chip achieves the corresponding processes achieved by the zero-power device in the various methods according to the embodiments of the present disclosure, which are not repeated herein for brevity.

In some embodiments, the chip is applied to the access point device according to the embodiments of the present disclosure, and the chip achieves the corresponding processes achieved by the access point device in various methods according to the embodiments of the present disclosure, which are not repeated herein for brevity.

In some embodiments, the chip is applied to the first device according to the embodiments of the present disclosure, and the chip achieves the corresponding processes achieved by the first device in the various methods according to the embodiments of the present disclosure, which are not repeated herein for brevity.

It is understandable that the chip referred to in the embodiments of the present disclosure is also referred to as a systematic chip, a system chip, a chip system, a system-on-chip, or the like.

FIG. 23 is a schematic block diagram of a communication system 900 according to some embodiments of the present disclosure. As shown in FIG. 23, the communication system 900 includes a zero-power device 910 and a communication device 920.

The zero-power device 910 is configured to perform the corresponding function achieved by the zero-power device in the methods described above, and the communication device 920 is configured to perform the corresponding function achieved by the access point device or the first device in the methods described above, which are not described herein for brevity.

It is understandable that the processor according to the embodiments of the present disclosure is an integrated circuit chip with signal-processing capabilities. In implementation, the processes of the method embodiments described above are accomplished by integrated logic circuits of hardware in the processor or by instructions in the form of software. The above-described processor is a general-purpose processor, a digital signal processor (DSP), an application-specific integrated circuit (ASIC), a field-programmable gate array (FPGA) or other programmable logic device, a discrete gate or transistor logic device, or a discrete hardware component. Various methods, processes, and logic block diagrams according to the embodiments of the present disclosure are implemented or performed. The general-purpose processor is a microprocessor or the processor is any conventional processor. The processes of the methods disclosed in conjunction with the embodiments in the present disclosure are directly embodied as being performed by a hardware decoding processor, or performed with a combination of hardware and software modules in a decoding processor. The software module is configured in a random memory, a flash memory, a read-only memory, a programmable read-only memory or an electrically erasable programmable memory, a register, or other storage medium well established in the art. The storage medium is configured in a memory, and the processor reads information from the memory to perform the processes of the above methods in conjunction with the hardware.

It is understandable that the memory according to the embodiments of the present disclosure is a volatile memory or a non-volatile memory, or the memory includes both the volatile memory and the non-volatile memory. The non-volatile memory is a read-only memory (ROM), a programmable ROM (PROM), an erasable PROM (EPROM), an electrically EPROM (EEPROM), or a flash memory. The volatile memory is a random access memory (RAM), wherein the RAM is configured as an external cache. By way of illustration, but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), or a direct rambus RAM (DR RAM). It should be noted that the memory in the system and method described herein is intended to include, but is not limited to, these and any other suitable types of memory.

It is understandable that the above memories are exemplary but not limiting descriptions. For example, the memory according to the embodiments of the present disclosure is a SRAM, a DRAM, a SDRAM, a DDR SDRAM, an ESDRAM, a SLDRAM, or a DR RAM. That is, the memory according to the embodiments of the present disclosure is intended to include, but is not limited to, these and any other suitable types of memory.

Some embodiments of the present disclosure further provide a computer-readable storage medium for storing at least one computer program.

In some embodiments, the computer-readable storage medium is applied to the zero-power device according to the embodiments of the present disclosure. The at least one computer program, when loaded and run by a computer, causes the computer to perform the corresponding processes performed by the zero-power device in the various methods according to the embodiments of the present disclosure, which are not described herein for brevity.

In some embodiments, the computer-readable storage medium is applied to the access point device according to the embodiments of the present disclosure. The at least one computer program, when loaded and run by a computer, causes the computer to perform the corresponding processes performed by the access point device of the various methods according to the embodiments of the present disclosure, which are not repeated herein for brevity.

In some embodiments, the computer-readable storage medium is applied to the first device according to the embodiments of the present disclosure. The at least one computer program, when loaded and run by a computer, causes the computer to perform the corresponding processes performed by the first device in the various methods according to the embodiments of the present disclosure, which are not repeated herein for brevity.

Some embodiments of the present disclosure further provide a computer program product including at least one computer program instruction.

In some embodiments, the computer program product is applied to the zero-power device according to the embodiments of the present disclosure. The at least one computer program instruction, when loaded and run by a computer, causes the computer to perform the corresponding processes performed by the zero-power device in the various methods according to the embodiments of the present disclosure, which are not repeated herein for brevity.

In some embodiments, the computer program product is applied to the access point device according to the embodiments of the present disclosure. The at least one computer program instruction, when loaded and run by a computer, causes the computer to perform the corresponding processes performed by the access point device in the various methods according to the embodiments of the present disclosure, which are not repeated herein for brevity.

In some embodiments, the computer program product is applied to the first device according to the embodiments of the present disclosure. The at least one computer program instruction, when loaded and run by a computer, causes the computer to perform the corresponding processes performed by the first device in the various methods according to the embodiments of the present disclosure, which are not repeated herein for brevity.

Some embodiments of the present disclosure further provide a computer program.

In some embodiments, the computer program is applied to the zero-power device according to the embodiments of the present disclosure. The computer program, when loaded and run on a computer, causes the computer to perform the corresponding processes performed by the zero-power device in the various methods according to the embodiments of the present disclosure, which are not repeated herein for brevity.

In some embodiments, the computer program is applied to the access point device in the embodiment of the present disclosure. The computer program, when loaded and run on a computer, causes the computer to perform the corresponding processes performed by the access point device in the various methods according to the embodiments of the present disclosure, which are not repeated herein for brevity.

In some embodiments, the computer program is applied to the first device according to the embodiments of the present disclosure. The computer program, when loaded and run on a computer, causes the computer to perform the corresponding processes performed by the first device in the various methods according to the embodiments of the present disclosure, which are not repeated herein for brevity.

It should be noted by those skilled in the art that the units and algorithmic processes described in conjunction with the various examples of the embodiments disclosed herein may be performed by electronic hardware or a combination of computer software and electronic hardware. Whether these functions are performed in hardware or software depends on the particular application and design constraints of the technical solution. Those skilled in the art may use different methods to implement the described functions for each particular application, but such implementations should not be considered outside the scope of this application.

It should be clear to those skilled in the art that for the convenience and brevity of description, the specific working processes of the systems, apparatuses, and units described above are referred to the corresponding processes in the foregoing method embodiments, and not repeated herein.

In the several embodiments provided in the present disclosure, it is understandable that the systems, devices, and methods disclosed may be performed in other ways. For example, the above-described embodiments of the device are merely schematic. For example, the division of the units described herein is merely a logical functional division, and in the actual implementation, the units may be divided in other ways. For example, a plurality of units or components may be combined or may be integrated into another system, or some features may be ignored, or not implemented. In addition, the coupling or direct coupling or communication connection between each other shown or discussed may be realized through some interfaces, an indirect coupling or communication connection between devices or units may be electrical, mechanical, or otherwise.

The units illustrated as separated components may or may not be physically separated, and components shown as units may or may not be physical units. That is, the units or components may be arranged in a single place or may be distributed to a plurality of network units. Some or all of these units may be selected to fulfill the purpose of the present embodiment scheme based on actual needs.

In addition, the functional units in various embodiments of the present disclosure may be integrated into a single processing unit, or each unit may be physically present separately, or two or more units may be integrated into a single unit.

The function may be stored in a computer-readable storage medium in the case that the function is implemented as a software functional unit and sold or used as a separate product. With this understanding, the essence of the technical solution of the present application, a part of the technical solution which contributes to the related art, or a part of the technical solution may be embodied in the form of a software product. The computer software product is stored in a storage medium including several instructions to cause a computer device (which may be a personal computer, a server, or a network device) to perform all or part of the processes of the method described in various embodiments of the present disclosure. The aforementioned storage medium includes a USB flash drive, a removable hard disk, a ROM, a RAM, a diskette, a CD-ROM, or other medium that store program codes.

Described above are merely specific implementations of the present disclosure, but the protection scope of the present disclosure is not limited thereto. Those skilled in the art who are familiar with the technical field would readily think of variations or substitutions within the scope of the technology disclosed in the present disclosure, which shall be covered by the protection scope of the present disclosure. Therefore, the protection scope of this application shall be subject to protection scope of the claims.

## Claims

1. A method for wireless communication, comprising:
transmitting, by an access point device, a first signal, wherein the first signal comprises a first signal portion and a second signal portion, wherein the first signal portion is transmitted over a conventional 802.11 radio interface, and the second signal portion is transmitted over a zero-power radio interface, the first signal portion comprising a first preamble signal.

2. The method according to claim 1, wherein the second signal portion comprises at least one of: a second preamble signal, a header signal, or a data signal.

3. The method according to claim 1 or 2, wherein the second signal portion comprises first indication information, the first indication information indicating a resource location of the first signal portion.

4. The method according to claim 1 or 2, wherein a first offset is present between a resource location of the first signal portion and a resource location of the second signal portion.

5. The method according to claim 4, wherein the first offset is predefined or configured by the access point device.

6. The method according to any one of claims 1 to 5, wherein the second signal portion precedes the first signal portion in a time domain.

7. The method according to any one of claims 1 to 6, wherein the first preamble signal is configured for carrier sensing.

8. The method according to any one of claims 1 to 7, wherein the first preamble signal employs a signal waveform supported by the conventional 802.11 radio interface.

9. The method according to any one of claims 1 to 8, wherein the second signal portion employs a signal waveform supported by the zero-power radio interface.

10. A method for wireless communication, comprising:
receiving, by a zero-power device, a second signal portion of a first signal by a zero-power radio interface, wherein the first signal comprises a first signal portion and the second signal portion, the first signal portion being transmitted over a conventional 802.11 radio interface, the first signal portion comprising a first preamble signal.

11. The method according to claim 10, wherein the second signal portion comprises at least one of: a second preamble signal, a header signal, or a data signal.

12. The method according to claim 10 or 11, wherein the second signal portion comprises first indication information, the first indication information indicating a resource location of the first signal portion.

13. The method according to claim 10 or 11, wherein a first offset is present between a resource location of the first signal portion and a resource location of the second signal portion.

14. The method according to claim 13, wherein the first offset is predefined or configured by an access point device.

15. The method according to any one of claims 10 to 14, wherein the second signal portion precedes the first signal portion in a time domain.

16. The method according to any one of claims 10 to 15, wherein the first preamble signal is configured for carrier sensing.

17. The method according to any one of claims 10 to 16, wherein the first preamble signal employs a signal waveform supported by the conventional 802.11 radio interface.

18. The method according to any one of claims 10 to 17, wherein the second signal portion employs a signal waveform supported by the zero-power radio interface.

19. The method according to any one of claims 10 to 18, wherein the first signal is transmitted by an access point device.

20. A method for wireless communication, comprising:
transmitting, by a first device, a second signal, wherein the second signal comprises a third preamble signal and a carrier signal, and the second signal is configured for a zero-power device generating a backscatter signal.

21. The method according to claim 20, wherein the second signal comprises second indication information, the second indication information indicating locations of the third preamble signal and the carrier signal in the second signal.

22. The method according to claim 20 or 21, wherein the backscatter signal comprises a fourth preamble signal and a zero-power radio frame; or the backscatter signal comprises a zero-power radio frame.

23. The method according to claim 22, wherein the fourth preamble signal is acquired by backscattering the third preamble signal, and the zero-power radio frame is acquired by backscattering the carrier signal.

24. The method according to claim 22 or 23, wherein the zero-power radio frame comprises at least one of: a preamble signal, a header signal, or a data signal.

25. The method according to any one of claims 20 to 24, wherein the third preamble signal employs a signal waveform supported by a conventional 802.11 radio interface.

26. The method according to any one of claims 22-24, wherein the zero-power radio frame is transmitted by a zero-power radio interface.

27. The method according to any one of claims 20 to 26, wherein the first device is an access point device or a station device.

28. A method for wireless communication, comprising:
receiving, by a zero-power device, a second signal, wherein the second signal comprises a third preamble signal and a carrier signal; and
generating, by the zero-power device, a backscatter signal based on the second signal.

29. The method according to claim 28, wherein the second signal comprises second indication information, the second indication information indicating locations of the third preamble signal and the carrier signal in the second signal.

30. The method according to claim 28 or 29, wherein the backscatter signal comprises a fourth preamble signal and a zero-power radio frame; or the backscatter signal comprises a zero-power radio frame.

31. The method according to claim 30, wherein the fourth preamble signal is acquired by backscattering the third preamble signal, and the zero-power radio frame is acquired by backscattering the carrier signal.

32. The method according to claim 30 or 31, wherein the zero-power radio frame comprises at least one of: a preamble signal, a header signal, or a data signal.

33. The method according to any one of claims 30 to 32, wherein
the backscatter signal comprises the zero-power radio frame in a case that a channel for transmitting the second signal and a channel for transmitting the backscatter signal share a same channel bandwidth; or
the backscatter signal comprises the fourth preamble signal and the zero-power radio frame in a case that a channel for transmitting the second signal and a channel for transmitting the backscatter signal do not share a same channel bandwidth.

34. The method according to any one of claims 28 to 33, further comprising:
determining, by the zero-power device, whether to perform backscattering on the third preamble signal based on whether a channel for transmitting the second signal and a channel for transmitting the backscatter signal share a same channel bandwidth.

35. The method according to claim 34, wherein determining, by the zero-power device, whether to perform the backscattering on the third preamble signal based on whether the channel for transmitting the second signal and the channel for transmitting the backscatter signal share the same channel bandwidth comprises:
determining not to perform the backscattering on the third preamble signal in a case that the channel for transmitting the second signal and the channel for transmitting the backscatter signal share the same channel bandwidth; or
determining to perform the backscattering on the third preamble signal in a case that the channel for transmitting the second signal and the channel for transmitting the backscatter signal do not share the same channel bandwidth.

36. The method according to any one of claims 28 to 35, wherein the third preamble signal employs a signal waveform supported by a conventional 802.11 radio interface.

37. The method according to any one of claims 30 to 33, wherein the zero-power radio frame is transmitted by a zero-power radio interface.

38. The method according to any one of claims 28 to 37, wherein the second signal is transmitted by an access point device or a station device.

39. An access point device, comprising:
a communication unit, configured to transmit a first signal, wherein the first signal comprises a first signal portion and a second signal portion, wherein the first signal portion is transmitted over a conventional 802.11 radio interface, and the second signal portion is transmitted over a zero-power radio interface, the first signal portion comprising a first preamble signal.

40. A zero-power device, comprising:
a communication unit, configured to receive a second signal portion of a first signal by a zero-power radio interface, wherein the first signal comprises a first signal portion and the second signal portion, the first signal portion being transmitted over a conventional 802.11 radio interface, the first signal portion comprising a first preamble signal.

41. A communication device, comprising:
a communication unit, configured to transmit a second signal, wherein the second signal comprises a third preamble signal and a carrier signal, and the second signal is configured for a zero-power device generating a backscatter signal.

42. A zero-power device, comprising:
a communication unit, configured to receive a second signal, wherein the second signal comprises a third preamble signal and a carrier signal; and
a processing unit, configured to generate a backscatter signal based on the second signal.

43. An access point device, comprising: a processor and a memory configured to store at least one computer program, wherein the processor, when loading and running the at least one computer program from the memory, is caused to perform the method as defined in any one of claims 1 to 9.

44. A zero-power device, comprising: a processor and a memory configured to store at least one computer program, wherein the processor, when loading and running the at least one computer program from the memory, is caused to perform the method as defined in any one of claims 10 to 19.

45. A communication device, comprising: a processor and a memory configured to store at least one computer program, wherein the processor, when loading and running the at least one computer program from the memory, is caused to perform the method as defined in any one of claims 20 to 27.

46. A zero-power device, comprising: a processor and a memory configured to store at least one computer program, wherein the processor, when loading and running the at least one computer program from the memory, is caused to perform the method as defined in any one of claims 28 to 38.

47. A chip, comprising: a processor, wherein the processor, when loading and running at least one computer program from a memory, causes a device equipped with the chip to perform the method as defined in any one of claims 1 to 9, the method as defined in any one of claims 10 to 19, the method as defined any one of claims 20 to 27, or the method as defined any one of claims 28 to 38.

48. A computer-readable storage medium, wherein the computer-readable storage medium is configured to store at least one computer program, wherein the at least one computer program, when loaded and run by a computer, causes the computer to perform the method as defined in any one of claims 1 to 9, the method as defined in any one of claims 10 to 19, the method as defined any one of claims 20 to 27, or the method as defined any one of claims 28 to 38.

49. A computer program product, comprising: at least one computer program instruction, wherein the at least one computer program instruction, when loaded and executed by a computer, causes the computer to perform the method as defined in any one of claims 1 to 9, the method as defined in any one of claims 10 to 19, the method as defined any one of claims 20 to 27, or the method as defined any one of claims 28 to 38.

50. A computer program, wherein the computer program, when loaded and run by a computer, causes the computer to perform the method as defined in any one of claims 1 to 9, the method as defined in any one of claims 10 to 19, the method as defined any one of claims 20 to 27, or the method as defined any one of claims 28 to 38.
